# EUROPEAN PATENT SPECIFICATION

(11) **EP 2 344 970 B1**
(45) Date of publication and mention of the grant of the patent: **18.09.2019**
(21) Application number: 09826517.6
(22) Date of filing: 21.10.2009
(51) Int. Cl.: G06F 9/44, H04L 29/08

(54) **DATA CENTER AND DATA CENTER DESIGN**
DATENZENTRUM UND KONZEPT FÜR EIN DATENZENTRUM
CENTRE DE DONNÉES ET SA CONCEPTION

(30) Priority: 30.10.2008 US 261250
(43) Date of publication of application: 20.07.2011
(73) Proprietor: Hewlett Packard Enterprise Development LP, Houston, TX 77070 (US)
(72) Inventor: HAMILTON, Ken, Fort Collins, Colorado 80527-2400 (US); EINHORN, Steve, Fort Collins, Colorado 80527-2400 (US); WARREN, James, Fort Collins, Colorado 80527-2400 (US)
(74) Representative: Haseltine Lake Kempner LLP
(86) International application number: PCT/US2009/061534
(87) International publication number: WO 2010/056473

(56) References cited:
- EP-A2- 1 693 753
- WO-A2-03/102772
- US-A1- 2003 167 270
- US-A1- 2004 193 476
- US-A1- 2006 020 628
- US-A1- 2006 245 411

## Description

### BACKGROUND

A data center is a facility that provides computing services to an enterprise. A data center typically houses a variety of computer equipment and software applications used to provision the computing services. The computer equipment may include computers and servers, network equipment, storage equipment and telecommunication equipment. Additionally, further auxiliary equipment is provided to enable the computer equipment to operate. Such auxiliary equipment may include uninterruptible power supplies (UPS) and cooling equipment.

The Telecommunications Industry Association (TIA) TIA-942: Data Center Standards Overview and the Uptime Institute define a set of 4 data center tiers based largely on levels of redundancy. For example, tier 1 data centers offer the most basic set-up, whereas tier 4 data centers offer full redundancy with 99.995% availability. Unsurprisingly, increased redundancy equates to significantly increased capital costs and operating costs. By way of example, up to 50% of a tier 3 or 4 data center may be taken up with redundant power and cooling equipment, which can translate into as much as 50% of the overall capital cost of the data center.

Typically, when an enterprise builds a data center they typically build the highest tier data center for their budget. The enterprise then populates the data center with their IT equipment and populates the IT equipment with the enterprise's software applications.

US 2003/167270 A1 relates to A resource manager for a distributed environment including hosts instantiating copies of a scalable application, generates signals which start up, shutdown or move a selected one of the copies responsive to first information regarding performance of all copies of the scalable application and second information regarding performance of the hosts.

WO 03/102772 A2 A relates to a method, computer program product and system that establishes and maintains a business continuity policy in a server consolidation environment. Business continuity is ensured by enabling high availability of applications. When an application is started, restarted upon failure, or moved due to an overload situation, a system is selected best fulfilling the requirements for running the application. These requirements can include application requirements, such as an amount of available capacity to handle the load that will be placed on the system by the application. These requirements can further include system requirements, such as honouring a system limit of a number of applications that can be run on a particular system. Respective priorities of applications can be used to determine whether a lower-priority application can be moved to free resources for running a higher-priority application.

### SUMMARY

According to one aspect of the present invention, there is provided a data center comprising a plurality of data center sections. Each data center section has a different predefined level of reliability. Also provided is a plurality of sets of applications, each set of applications being populated on one of the plurality of data center sections.

According to a second aspect of the present invention, there is provided a method of designing a data center. The method comprises obtaining details of a set of applications to be populated in the data center. For each application a priority characteristic is determined. Based on the determined priority characteristics the applications are populated of different data center sections, with each data center section having a different predefined level of reliability.

### BRIEF DESCRIPTION

Embodiments of invention will now be described, by way of nonlimiting example only, with reference to the accompanying drawings, in which:
Figure 1 is a block diagram showing a monolithic tiered data center according to the prior art;
Figure 2 is a block diagram showing of a number of software applications;
Figure 3A is a flow diagram outlining example processing steps taken during a data center design process according to an embodiment of the present invention;
Figure 3B is a flow diagram outlining example processing steps taken during a data center design process according to a further embodiment of the present invention;
Figure 4 is a block diagram showing a hybrid tiered data center according to one embodiment of the present invention; and
Figure 5 is a block diagram showing a hybrid tiered data center according to further embodiment of the present invention.

### DETAILED DESCRIPTION

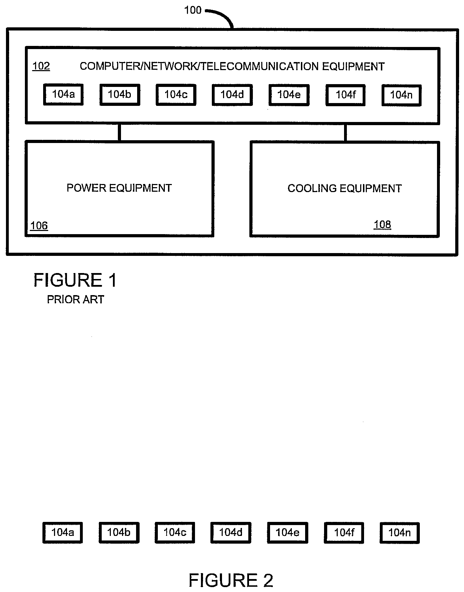

Figure 1 shows a simplified block diagram of a monolithic tiered data center 100 according to the prior art. The data center 100 includes computing equipment 102, which may include computers, servers, networking, and telecommunication equipment, on which run numerous software applications 104a to 104n. The equipment 102 is powered by power equipment 106 and is cooled by cooling equipment 108. The exact nature of the power equipment 106 and cooling equipment 108 depends on the tier classification of the data center 100. For example, a tier 4 data center may have multiple power and cooling distribution paths including 2N+1 redundancy (i.e. 2 UPS each with N+1 redundancy), whereas a tier 1 data center may have only a single path for power and cooling distribution, with no redundant components.

Given the increasing operating costs of running a data center, especially with respect to power and cooling, data center operators are looking to reduce the cost of and improve the efficiency of their data centers. Currently, this is being done by applying localized solutions to power, space, and cooling. Such localized solutions include, for example, use of more energy efficient cooling systems, server consolidation, and outsourcing of workload.

The present invention, however, is based largely on the realization that significant efficiency and cost savings can be achieved if the nature of the applications intended to be run in the data center are considered during the planning, design, and configuration phases, as will be explained below in more detail.

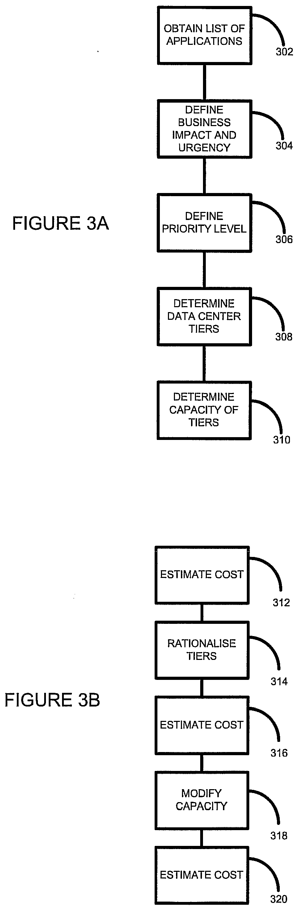

Reference will now be made to Figure 2, which shows a block diagram of a number of software applications 104a to 104i that are to run or are planned to be run in a data center. Additional reference is made to the flow diagrams shown in Figures 3A and 3B. Those skilled in the art will appreciate, however, that only a small number of software applications are discussed herein for reasons of clarity, and will further appreciate that the number of software applications in a typical data center may run into the many thousands and beyond.

At step 302 a list of software applications to be run or planned to be run in the data center is obtained. In the present example, software applications 104a to 104i are identified. These applications may be individual applications or may be a suite of one or more applications.

For each software application 104a to 104i a business impact and urgency level is assigned (step 304). In this sense, in line with standard Information Technology Infrastructure Library (ITIL) terminology, business impact refers to the impact on the enterprise business should that software application not be available, due, for example, to a hardware failure. Urgency refers to the time delay in which such an application should be made available following the application becoming unavailable. For example, in a banking environment, an application providing authorization to withdraw funds from an ATM machine may be classed as having high impact and high urgency, whereas an application providing the overnight transfer of funds from one account to another may be classed as having high impact and medium urgency.

At step 306 a priority level, based on the defined business impact and urgency is defined. Table 1 below, for example, shows an example mapping of business impact and urgency to priority.

**Table 1 - Mapping of business impact and urgency to priority**

| | | Impact | | |
|---|---|---|---|---|
| | | **High** | **Medium** | **Low** |
| Urgency | **High** | Critical | High | Medium |
| | **Medium** | High | Medium | Low |
| | **Low** | Medium | Low | Planning |

Thus, in the present example, an application having high urgency and high business impact is defined as having a critical priority. Similarly, an application having high impact and medium urgency is defined as having a high priority.

In the present embodiment software applications 104a, 104d, and 104e are determined to be low priority, applications 104c, 104f, and 104k as medium priority, and applications 104b, 104g, and 104i as critical priority.

Once the priority of each software application has been defined, the number and type of data center sections or tiers may be determined (step 308). Currently there are 4 widely accepted industry standard data center tiers, with tier 1 data centers offering the most basic reliability levels, and tier 4 data centers offering full or near full redundancy with 99.995% availability. Those skilled in the art will appreciate that different numbers of data center sections or tiers could be used, each having a different level of reliability, redundancy, or other appropriate characteristics.

For example, if the defined priorities of the applications 104a to 104i include low, medium, and critical priorities, it may be initially determined that a data center comprising tiers 1, 2 and 4 is suitable.

In this case, for example, applications having a critical priority may be populated on computer equipment in a Tier 4 data centre, applications having a medium priority on computer equipment may be populated in a Tier 2 data centre, and applications having a low priority may be populated on computer equipment in a Tier 1 data center. In this way, each application is mapped to data center tier offering a level of reliability and redundancy corresponding to the determined priority of that application.

In step 310 the capacity of each data center tier determined in step 308 may be estimated. This estimation may be based, for example, on the performance requirements (such as required processing power, required memory, required network bandwidth, etc) of the applications intended to be populated in each data center tier, an estimated physical size of the data center tier, and/or an estimated power density of the data center tier.

According to a further embodiment, a further set of steps, shown in Figure 3B may be additionally performed. The additional steps aim to optimize, or at least improve upon, the data center design based on financial considerations.

In step 312 an estimated capital cost of the data center is determined based, for example, on the number of determined data center tiers and their capacity.

In step 314 the data center tiers determined at step 308 are analyzed, from a financial perspective, to determine whether any consolidation of the tiers may be achieved. For example, in situations where there are large number of low and critical priority applications, and a low number of medium priority applications, it may be more cost effective to design a data center having a tier 1 section for the low priority applications and a tier 4 section for the critical and medium priority application, rather than having an additional tier 3 section just for the low number of medium priority applications. This is based on the fact that the construction of each data center tier section has a minimum fixed cost associated therewith. If appropriate, the data center design is rationalized, and a new cost estimated (step 316).

In step 318 the capacity of each proposed data center tier may be modified and its effect on the estimated cost of the proposed data center evaluated (step 320).

This process may be repeated numerous times, each time modifying different characteristics of the proposed data center. In this way, a proposed data center may be arrived at that is initially substantially optimized from a business perspective and, alternatively, additionally substantially optimized from a financial perspective. A proposed data center may include various different data center tiers of varying capacities depending on individual requirements.

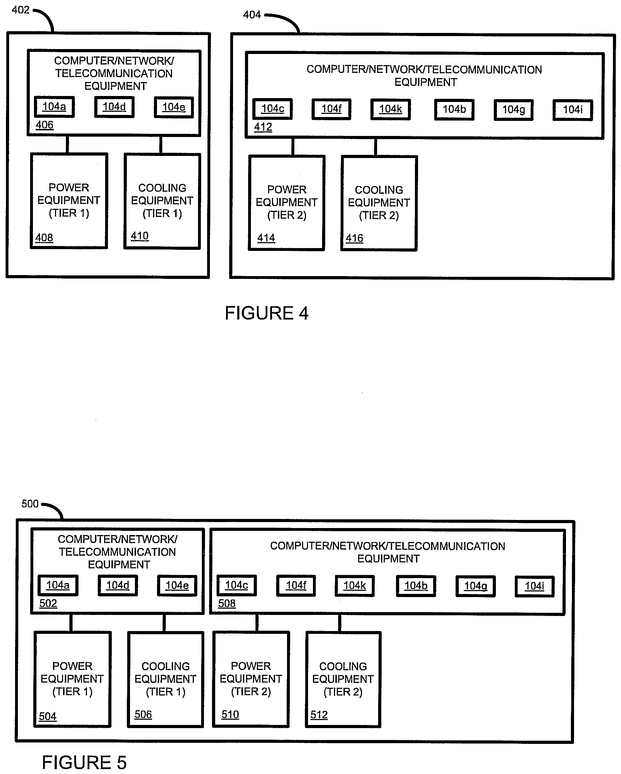

The data center tiers described above may be implemented either in individual physically separate data centers, as shown in Figure 4, or by a single hybrid tiered data center as shown in Figure 5, or in any suitable combination or arrangement.

Figure 4 shows a block diagram of a first data center arrangement according to an embodiment of the present invention. In Figure 4, there are shown a number of different data centers 402 and 404. Data center 402 is a tier 1 data center, and houses low priority applications 104a, 104d, and 104f. Data center 402 has tier 1 power equipment 408 and tier 1 cooling equipment 410. Data center 404 is a tier 4 data center and houses medium priority applications 104c, 104f and 104k and critical priority applications 104b, 104g and 104i Data center 404 has tier 4 power equipment 414 and tier 4 cooling equipment 416. With appropriate network access and interconnection, the data centers 402 and 404 provide seamless enterprise computing services.

Figure 5 shows an example hybrid tiered data center 500 designed by following the above-described methods. The hybrid tiered data center 500 provides different data center sections each providing different reliability and redundancy characteristics of different data center tiers within a single physical data center. For example, computer, network and/or telecommunication equipment 402, power equipment 404, and cooling equipment 406 are arranged to provide the reliability and redundancy characteristics of a tier 1 data center for applications 104a, 104d, and 104e. Computer, network and/or telecommunication equipment 408, power equipment 410, and cooling equipment 412 are arranged to provide the reliability and redundancy characteristics of a tier 4 data center for applications 104c, 104f, 104k, 104b 104g, and 104i.

By providing a single hybrid data center, further cost savings may be achieved by allowing sharing of common facilities and infrastructure, such as sharing of a physical enclosure or facility, sharing of security systems, access controls, and the like.

By basing the initial data center design and configuration on the business considerations, such as the priority of the applications that are to run in the data center, significant cost savings and energy efficiency can be achieved. For example, if the applications 104a to 104i were to all have been housed in a single monolithic tier 4 data center, significant capital costs and operating costs would have been wasted on providing the low and medium priority applications with a level of redundancy and reliability over and above that determined, by the business, as necessary for those applications. In existing monolithic data centers it is estimated that as many as 50% of the applications running in such data centers can be classified as non-business critical.

Although the present embodiments have been described with reference to ITIL principles, those skilled in the art will appreciate that other business service prioritization frameworks, such as ISO 20000, could also be used.

In further embodiments, not all of the method steps outline above are performed, or are performed in a sequence different from that described above.

It should also be understood that the techniques of the present invention might be implemented using a variety of technologies. For example, the methods described herein may be implemented in software executing on a computer system, or implemented in hardware utilizing either a combination of microprocessors or other specially designed application specific integrated circuits, programmable logic devices, or various combinations thereof. In particular, methods described herein may be implemented by a series of computer-executable instructions residing on a suitable computer-readable medium. Suitable computer-readable media may include volatile (e.g., RAM) and/or nonvolatile (e.g., ROM, disk) memory, carrier waves and transmission media (e.g., copper wire, coaxial cable, fiber optic media). Exemplary carrier waves may take the form of electrical, electromagnetic, or optical signals conveying digital data streams along a local network, a publicly accessible network such as the Internet or some other communication link.

## Claims

1. A data center (100) comprising:
a plurality of data center sections, each section having a different predefined level of reliability and redundancy; and
a plurality of sets of applications (104a - 104n), each set of applications (104a - 104n) being populated on one of the plurality of data center sections,
wherein each set of applications (104a - 104n), has a determined priority, and further wherein each set of applications (104a - 104n) is populated on a data center section having a level of reliability and redundancy suitable to the determined priority.

2. The data center of claim 1, wherein the plurality of sets of applications further include applications planned to be populated on one of the plurality of data center sections.

3. The data center of claim 1, wherein each data center section is one of either an independent physical data center or a section of a data center within a single physical data center.

4. The data center of claim 3, wherein each data center section is network interconnected.

5. The data center of claim 1, wherein each data center section further comprises power and cooling equipment suitable for providing the level of reliability and redundancy required by each data center section.

6. The data center of claim 5, wherein each data center section is a section within a single physical data center, each section sharing common infrastructure elements on the same physical data center.

7. A method of designing a data center (100) comprising:
obtaining details of a set of applications (104a - 104n) to be populated in the data center;
determining a priority characteristic for each applications (104a - 104n); and
determining, based on the obtained priority characteristics, a plurality of data center sections on which the applications (104a - 104n) are to be populated, each data center section having a different predefined level of reliability and redundancy associated with the determined priority characteristic for each applications (104a - 104n).

8. The method according to claim 7, further comprising populating at least some of the plurality of applications on a data center section having a level of reliability corresponding to the determined level of priority of each application.

9. The method according to claim 7, further comprising determining the number of data center sections based in part on the determined priority of each set of applications and in part on a financial analysis.

10. The method according to claim 7, further comprising performing the method steps iteratively to substantially optimize the data center design.

11. The method according to claim 7, wherein a capacity of each of the plurality of data center sections is based on the performance requirements of the applications to be populated therein.

## Patentansprüche

1. Rechenzentrum (100), Folgendes umfassend:
mehrere Rechenzentrumsabschnitte, wobei jeder Abschnitt einen unterschiedlichen vordefinierten Grad an Zuverlässigkeit und Redundanz aufweist; und
mehrere Sätze von Anwendungen (104a -104n), wobei jeder Satz von Anwendungen (104a - 104n) auf einem der mehreren Rechenzentrumsabschnitte bestückt ist,
wobei jeder Satz von Anwendungen (104a -104n) eine bestimmte Priorität aufweist, und
wobei ferner jeder Satz von Anwendungen (104a - 104n) auf einem Rechenzentrumsabschnitt mit einem für die bestimmte Priorität geeigneten Grad an Zuverlässigkeit und Redundanz bestückt ist.

2. Rechenzentrum nach Anspruch 1, wobei die mehreren Sätze von Anwendungen ferner Anwendungen beinhalten, die so geplant sind, dass sie auf einem der mehreren Rechenzentrumsabschnitte bestückt werden.

3. Rechenzentrum nach Anspruch 1, wobei jeder Rechenzentrumsabschnitt einer von entweder einem unabhängigen physischen Rechenzentrum oder einem Abschnitt eines Rechenzentrums innerhalb eines einzelnen physischen Rechenzentrums ist.

4. Rechenzentrum nach Anspruch 3,
wobei jeder Rechenzentrumsabschnitt netzwerk-verbunden ist.

5. Rechenzentrum nach Anspruch 1, wobei jeder Rechenzentrumsabschnitt ferner Strom- und Kühlgeräte umfasst, die geeignet sind, den von jedem Rechenzentrumsabschnitt geforderten Grad an Zuverlässigkeit und Redundanz bereitzustellen.

6. Rechenzentrum nach Anspruch 5,
wobei jeder Rechenzentrumsabschnitt ein Abschnitt innerhalb eines einzelnen physischen Rechenzentrums ist, wobei jeder Abschnitt gemeinsame Infrastrukturelemente auf demselben physischen Rechenzentrum teilt.

7. Verfahren zum Entwerfen eines Rechenzentrums (100), Folgendes umfassend:
Erhalten von Details eines Satzes von Anwendungen (104a -104n), die in dem Rechenzentrum zu bestücken sind;
Bestimmen einer Prioritätseigenschaft für jede Anwendung (104a -104n); und
Bestimmen, basierend auf den erhaltenen Prioritätseigenschaften, mehrerer Rechenzentrumsabschnitte, auf denen die Anwendungen (104a -104n) bestückt werden sollen, wobei jeder Rechenzentrumsabschnitt einen anderen vordefinierten Grad an Zuverlässigkeit und Redundanz aufweist, der mit der bestimmten Prioritätseigenschaft für jede Anwendung (104a -104n) verbunden ist.

8. Verfahren nach Anspruch 7,
ferner umfassend das Bestücken von mindestens einigen von mehreren Anwendungen auf einem Rechenzentrumsabschnitt mit einem Grad an Zuverlässigkeit, der dem bestimmten Prioritätsgrad jeder Anwendung entspricht.

9. Verfahren nach Anspruch 7,
ferner umfassend das Bestimmen der Anzahl von Rechenzentrumsabschnitten basierend zum Teil auf der bestimmten Priorität jedes Satzes von Anwendungen und zum Teil auf einer Finanzanalyse.

10. Verfahren nach Anspruch 7,
ferner umfassend das iterative Durchführen der Verfahrensschritte, um das Rechenzentrumsdesign im Wesentlichen zu optimieren.

11. Verfahren nach Anspruch 7,
wobei eine Kapazität jedes der mehreren Rechenzentrumsabschnitte auf den Leistungsanforderungen der darin zu bestückenden Anwendungen basiert.

## Revendications

1. Centre de données (100) comprenant :
une pluralité de sections de centre de données, chaque section ayant un niveau de fiabilité et de redondance prédéfini différent ; et
une pluralité d'ensembles d'applications (104a à 104n), chaque ensemble d'applications (104a à 104n) étant rempli sur l'une de la pluralité de sections de centre de données,
chaque ensemble d'applications (104a à 104n) ayant une priorité déterminée, et chaque ensemble d'applications (104a à 104n) étant en outre rempli sur une section de centre de données ayant un niveau de fiabilité et de redondance adapté à la priorité déterminée.

2. Centre de données selon la revendication 1, la pluralité d'ensembles d'applications comprenant en outre des applications destinées à être remplies sur l'une de la pluralité de sections de centre de données.

3. Centre de données selon la revendication 1, chaque section de centre de données étant soit un centre de données physique indépendant, soit une section d'un centre de données dans un seul centre de données physique.

4. Centre de données selon la revendication 3, chaque section de centre de données étant interconnectée au réseau.

5. Centre de données selon la revendication 1, chaque section de centre de données comprenant en outre un équipement d'alimentation et de refroidissement adapté pour fournir le niveau de fiabilité et de redondance requis par chaque section de centre de données.

6. Centre de données selon la revendication 5, chaque section de centre de données étant une section dans un seul centre de données physique, chaque section partageant des éléments d'infrastructure communs sur le même centre de données physique.

7. Procédé de conception d'un centre de données (100) comprenant :
l'obtention de détails d'un ensemble d'applications (104a à 104n) à remplir dans le centre de données ;
la détermination d'une caractéristique de priorité pour chaque application (104a à 104n) ; et
la détermination, sur la base des caractéristiques de priorité obtenues, d'une pluralité de sections de centre de données sur lesquelles les applications (104a à 104n) doivent être remplies, chaque section de centre de données ayant un niveau de fiabilité et de redondance prédéfini différent associé à la caractéristique de priorité déterminée pour chaque application (104a à 104n).

8. Procédé selon la revendication 7, comprenant en outre le remplissage d'au moins certaines de la pluralité d'applications sur une section de centre de données ayant un niveau de fiabilité correspondant au niveau de priorité déterminé de chaque application.

9. Procédé selon la revendication 7, comprenant en outre la détermination du nombre de sections de centre de données sur la base en partie de la priorité déterminée de chaque ensemble d'applications et en partie d'une analyse financière.

10. Procédé selon la revendication 7, comprenant en outre l'exécution des étapes du procédé de manière itérative pour optimiser sensiblement la conception du centre de données.

11. Procédé selon la revendication 7, dans lequel une capacité de chacune de la pluralité de sections de centre de données est basée sur les exigences de performance des applications devant être remplies sur celles-ci.
